# EUROPEAN PATENT APPLICATION

(11) **EP 3 575 074 A1**
(43) Date of publication of application: **04.12.2019**
(21) Application number: 18744276.9
(22) Date of filing: 24.01.2018
(51) Int. Cl.: B32B 3/08, B32B 27/02

(54) **FABRIC STRUCTURE, THICKENED FABRIC STRUCTURE, AND METHOD FOR MANUFACTURING FABRIC STRUCTURE**

(30) Priority: 25.01.2017 CN 201710061335
(71) Applicant: Qingyuan Global Technology Services Ltd., Qingyuan City, Guangdong 511800 (CN)
(72) Inventor: LUH, Yih-Ping, Taipei 104 (TW)
(74) Representative: dompatent von Kreisler Selting Werner - Partnerschaft von Patent- und Rechtsanwälten mbB
(86) International application number: PCT/CN2018/073977
(87) International publication number: WO 2018/137651

(57) **Abstract**

The fabric structure of the present invention includes a bottom layer, a middle layer disposed on the bottom layer, and a top layer disposed on the middle layer. A fabric layer is knitted by a plurality of yarns, wherein the outer surface of each yarn is at least covered by a first fusion part. A plurality of structure bodies disposed on the fabric layer, wherein the projection of any of the plurality of structure bodies on the fabric layer at least partially eclipses any of the grid cells of the fabric layer. Each of the plurality of the structure bodies includes a body and a second fusion part encapsulating the body. The first fusion part and the second fusion part fuse with each other to make the relative positions of the plurality of structure bodies and the plurality of yarns fixed.

## Description

### BACKGROUND OF THE INVENTION

### 1. Field of the Invention

The present invention relates generally to a fabric structure, a stacking fabric structure, and a method for manufacturing a fabric structure. More particularly, the present invention relates to a fabric structure, a stacking fabric structure, and a method for manufacturing a fabric structure for a sole of a shoe.

### 2. Description of the Prior Art

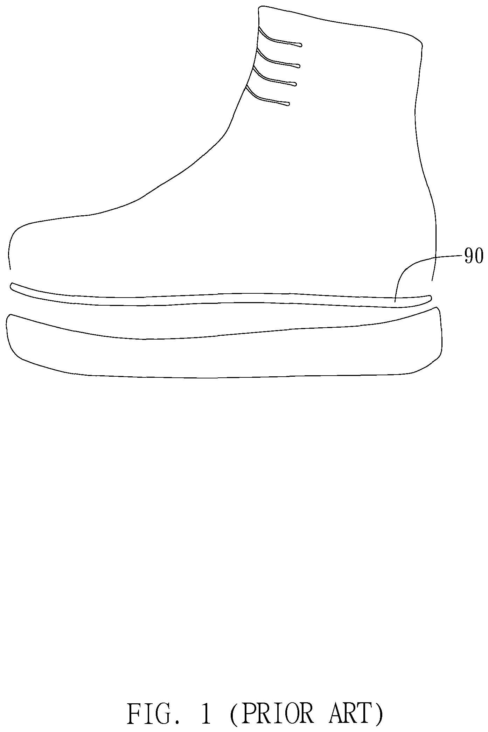

As shown in FIG. 1, elastic materials/ structures are often used in the soles 90 of shoes. More particularly, in addition to good elasticity to absorb shock while walking and provide buffering for feet to enhance comfort, lighter weight is preferred for the elastic materials/structures to reduce the user's burden.

Foam polyethylene is an elastic material commonly used in the soles of shoes which provides good elasticity and lighter weight. The quality of foam polyethylene depends on the size, the number, and the degree of size uniformity of the foam pores. Soles made from foam polyethylene having poor quality may result in damage to feet of the users due to nonuniform compressive deformation.

### SUMMARY OF THE INVENTION

It is an object of the present invention to provide a fabric structure having lighter weight, better elasticity, and more stable quality.

It is another object of the present invention to provide a stacking fabric structure having lighter weight, better elasticity, and more stable quality.

It is another object of the present invention to provide a method for manufacturing a fabric structure having lighter weight, better elasticity, and more stable quality.

The fabric structure of the present invention includes a bottom layer, a middle layer disposed on the bottom layer, and a top layer disposed on the middle layer. The middle layer includes a fabric layer and a plurality of structure bodies. The fabric layer is knitted from a plurality of yarns, wherein the outer surface of each yarn is at least partly covered by a first fusion part. The plurality of structure bodies are disposed on the fabric layer, wherein the projection of any of the plurality of structure bodies on the fabric layer at least partially eclipses any of the grid cells of the fabric layer. Each of the plurality of the structure bodies includes a body and a second fusion part encapsulating the body. The first fusion part and the second fusion part fuse with each other to make the relative positions of the plurality of structure bodies and the plurality of yarns fixed. The melting points of the first fusion part and the second fusion part are respectively lower than or equal to the melting points of the bottom layer, the yarns, the bodies, and the top layer.

In one embodiment of the present invention, the first fusion part is made of thermoplastic polyurethane (TPU).

In one embodiment of the present invention, the first fusion part and the second fusion part are made of the same material.

In one embodiment of the present invention, the outer surface of each yarn is entirely covered by the first fusion part.

In one embodiment of the present invention, the first fusion part is yarn in shape and twines to partially cover the outer surface of each yarn.

In one embodiment of the present invention, the fabric structure includes a bottom layer, a middle layer disposed on the bottom layer, and a top layer disposed on the middle layer. The middle layer includes a fabric layer, a plurality of bodies, and a fusion unit. The fabric layer is knitted by a plurality of yarns. The plurality of bodies are disposed on the fabric layer, wherein the projection of any of the plurality of bodies on the fabric layer at least partially eclipses any of the grid cells of the fabric layer. The fusion unit is disposed between the plurality of bodies and the fabric layer to make the relative positions of the plurality of bodies and the plurality of yarns fixed, wherein the fusion unit encapsulates the plurality of bodies and at least partially covers the plurality of yarns. The melting point of the fusion unit is respectively lower than or equal to the melting points of the bottom layer, the yarns, the bodies, and the top layer.

In one embodiment of the present invention, the body is manufactured by foaming.

In one embodiment of the present invention, the fusion unit is made of thermoplastic polyurethane (TPU).

In one embodiment of the present invention, the yarns and the bodies are made of thermoplastic polyester elastomer (TPEE).

In one embodiment of the present invention, the bottom layer and the top layer are made of thermoplastic polyester elastomer (TPEE).

In one embodiment of the present invention, the fabric structure is for shoe soles.

The stacking fabric structure of the present invention includes a bottom layer, a middle layer stack disposed on the bottom layer, and a top layer disposed on the middle layer. The middle layer stack includes a plurality of stacked middle layers. Each middle layer includes a fabric layer and a plurality of structure bodies. The fabric layer is knitted by a plurality of yarns. The outer surface of each yarn is at least partly covered by a first fusion part. The plurality of structure bodies are disposed on the fabric layer, wherein the projection of any of the plurality of structure bodies on the fabric layer at least partially eclipses any of the grid cells of the fabric layer. Each of the plurality of the structure bodies includes a body and a second fusion part encapsulating the body. The first fusion part and the second fusion part fuse with each other to make the relative positions of the plurality of structure bodies and the plurality of yarns fixed. The melting points of the first fusion part and the second fusion part are respectively lower than or equal to the melting points of the bottom layer, the yarns, the bodies, and the top layer.

In one embodiment of the present invention, the stacking fabric structure includes a bottom layer, a middle layer stack disposed on the bottom layer, and a top layer disposed on the middle layer. The middle layer stack includes a plurality of stacked middle layers. Each middle layer includes a fabric layer, a plurality of bodies, and a fusion unit. The fabric layer is knitted by a plurality of yarns. The plurality of bodies are disposed on the fabric layer, wherein the projection of any of the plurality of bodies on the fabric layer at least partially eclipses any of the grid cells of the fabric layer. The fusion unit is disposed between the plurality of bodies and the fabric layer to make the relative positions of the plurality of bodies and the plurality of yarns fixed, wherein the fusion unit encapsulates the plurality of bodies and at least partially covers the plurality of yarns. The melting point of the fusion unit is respectively lower than or equal to the melting points of the bottom layer, the yarns, the bodies, and the top layer.

In one embodiment of the present invention, the stacking fabric structure is for shoe soles.

The method for manufacturing a fabric structure of the present invention includes (A) providing a fabric layer knitted by a plurality of yarns, wherein the outer surface of each yarn is at least partly covered by a first fusion part, wherein the melting point of the first fusion part is lower than or equal to the melting point of the yarn; (B) disposing a plurality of structure bodies on the fabric layer, wherein the projection of any of the plurality of structure bodies on the fabric layer at least partially eclipses any of the grid cells of the fabric layer, wherein each of the plurality of the structure bodies includes a body and a second fusion part encapsulating the body, wherein the melting point of the second fusion part is lower than or equal to the melting point of the body, wherein the first fusion part and the second fusion part are able to fuse with each other; (C) pressing downward to exert a force on the plurality of structure bodies and heating to a temperature higher than or equal to the melting points of the first fusion part and the second fusion part to make the first fusion part and the second fusion part fuse with each other; (D) cooling to make the relative positions of the plurality of structure bodies and the plurality of yarns fixed.

In one embodiment of the present invention, the method for manufacturing a fabric structure further includes providing a bottom layer before step (A) and disposing the fabric layer on the bottom layer, wherein the melting points of the first fusion part and the second fusion part are respectively lower than or equal to the melting point of the bottom layer; and providing a top layer between step (B) and step (C) and pressing downward to exert a force on the top layer, wherein the melting points of the first fusion part and the second fusion part are respectively lower than or equal to the melting point of the top layer.

Accordingly, the fabric structure and the stacking fabric structure of the present invention have lighter weight and more stable quality. The method can be used to manufacture the above fabric structure and stacking fabric structure. The problems in prior arts can be solved.

### BRIEF DESCRIPTION OF THE DRAWINGS

FIG. 1 is a schematic view of a prior art;
FIG. 2 is a schematic view of an embodiment of the fabric structure of the present invention;
FIG. 3A is a schematic view of an embodiment of the present invention wherein the outer surface of each yarn is entirely covered by the first fusion part;
FIG. 3B is a schematic view of an embodiment of the present invention wherein the first fusion part is yarn in shape and twines to partially cover the outer surface of each yarn;
FIG. 4 is a cross-sectional view of an embodiment of the fabric structure of the present invention;
FIG. 5 is a schematic view of an embodiment of the present invention wherein the structure bodies are embedded into the grid cells;
FIG. 6 is a cross-sectional view of an embodiment with different point of view of the fabric structure of the present invention;
FIG. 7A is a schematic view of an embodiment of the present invention wherein the fabric structure is disposed between an upper clamp and a lower clamp to be hot pressed;
FIG. 7B is a schematic view of an embodiment of a stacking fabric structure of the present invention;
FIG. 8 is a flow chart of an embodiment of a method for manufacturing a fabric structure of the present invention;
FIG. 9 is a flow chart of a different embodiment of a method for manufacturing a fabric structure of the present invention.

### DETAILED DESCRIPTION OF THE PREFERRED EMBODIMENT

In the preferred embodiment, based on the elasticity and lighter weight, the fabric structure and the stacking fabric structure are for the sole, especially the midsole, of shoes. In different embodiments, however, the fabric structure and the stacking fabric structure of the present can be used in different ways, e.g. as a bumper pad of backpacks, inner shell of helmets, or armors.

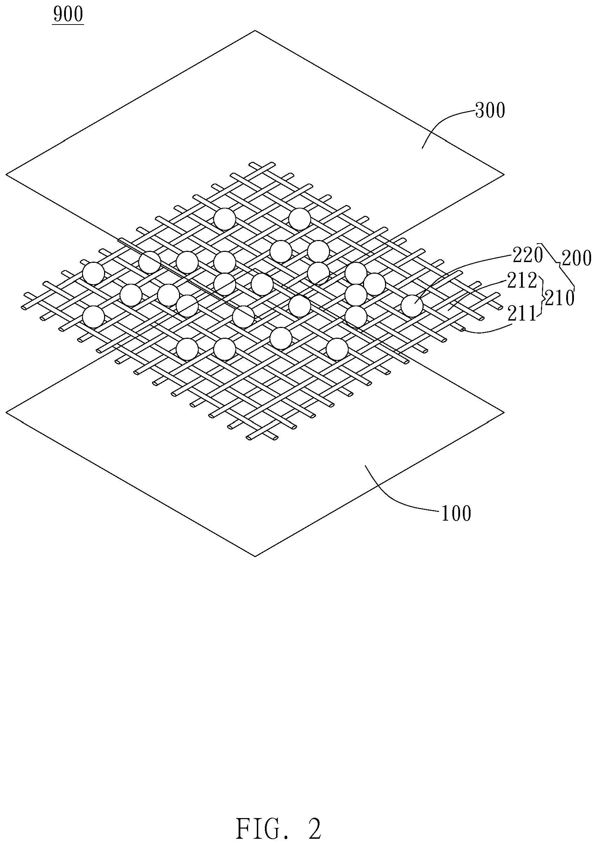

As shown in the embodiment in FIG. 2, the fabric structure 900 of the present invention includes a bottom layer 100, a middle layer 200 disposed on the bottom layer 100, and a top layer 300 disposed on the middle layer 200. The middle layer 200 includes a fabric layer 210 and a plurality of structure bodies 220. The fabric layer 210 is knitted by a plurality of yarns 211. The structure bodies 220 can be spheres, ellipsoids, and other regular/irregular shapes.

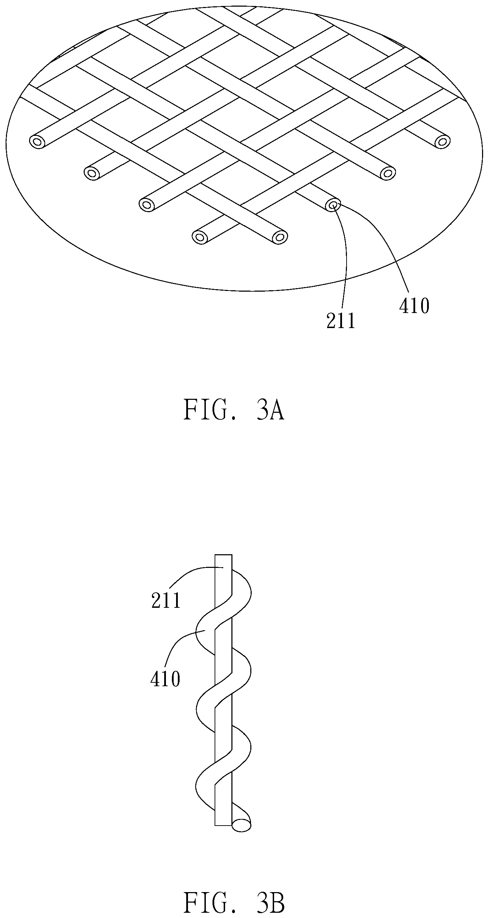

As shown in the embodiments in FIGs. 3A and 3B, the outer surface of each yarn 211 is at least covered by a first fusion part 410. More particularly, as shown in the embodiment in FIG. 3A, the outer surface of each yarn 211 is entirely covered by the first fusion part 410 for obtaining better coverage and fixation. In different embodiments, however, the outer surface of each yarn 211 is not limited to be entirely covered by the first fusion part 410 for obtaining better coverage and fixation when material and manufacturing cost are taken into consideration. As shown in the embodiment in FIG. 3B, the first fusion part 410 is yarn in shape and twines to partially cover the outer surface of each yarn 211. More particularly, the yarn 211 and the yarn-shape first fusion part 410 are twisted with each other to form the structure shown in FIG. 3B. Since yarn twisting is an established technique, the manufacturing difficulty can be reduced this way. On the other hand, the material cost of first fusion part 410 can also be reduced.

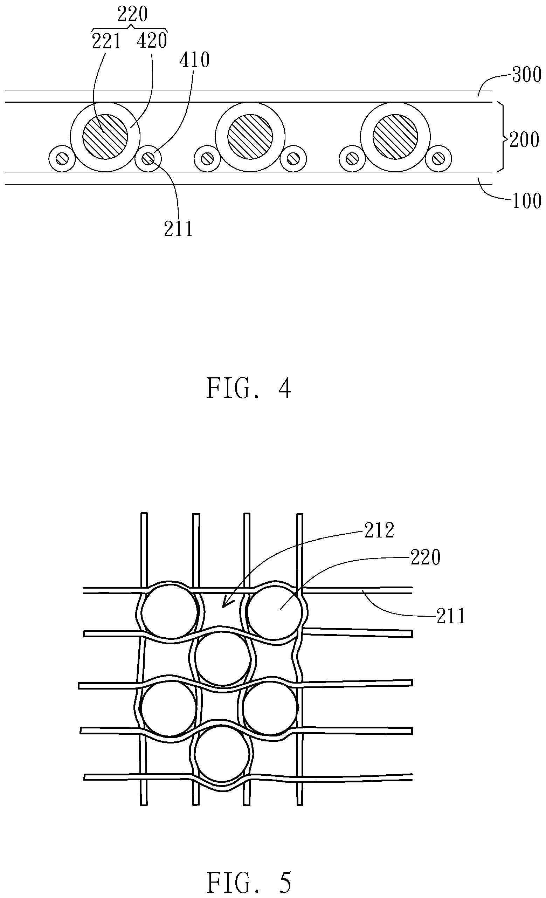

As shown in the embodiment in FIG. 2, the plurality of structure bodies 220 are disposed on the fabric layer 210. As shown in the embodiment in FIG. 4, the projection of any of the plurality of structure bodies 220 on the fabric layer 210 at least partially eclipses any of the grid cells of the fabric layer 210. Each of the plurality of the structure bodies 220 includes a body 221 and a second fusion part 420 encapsulating the body 221. The first fusion part 410 and the second fusion part 420 fuse with each other to make the relative positions of the plurality of structure bodies 220 and the plurality of yarns fixed. The melting points of the first fusion part 410 and the second fusion part 420 are respectively lower than or equal to the melting points of the bottom layer 100, the yarns 211, the bodies 221, and the top layer 300.

More particularly, the material of the first fusion part 410 and the material of the second fusion part 420 are able to fuse with each other in the melted state. In other words, there is no obvious boundary in the mixture of the first fusion part 410 and the second fusion part 420. The first fusion part 410 and the second fusion part 420 can be made of the same or of different materials. In one embodiment of the present invention, the first fusion part 410 and the second fusion part 420 are both made of thermoplastic polyurethane (TPU). Specifically, when the plurality of structure bodies 220 are pressed downward and heated to a temperature higher than or equal to the melting points of the first fusion part 410 and the second fusion part 420, the first fusion part 410 and the second fusion part 420 are in melted state and fuse with each other for the structure bodies 220 to be embedded into the grid cells 212 as shown in FIG. 5. After cooling, the relative positions of the bodies 221 in the structure bodies 220 and the plurality of yarns 211 are fixed since the first fusion part 410 and the second fusion part 420 are not in the melted state.

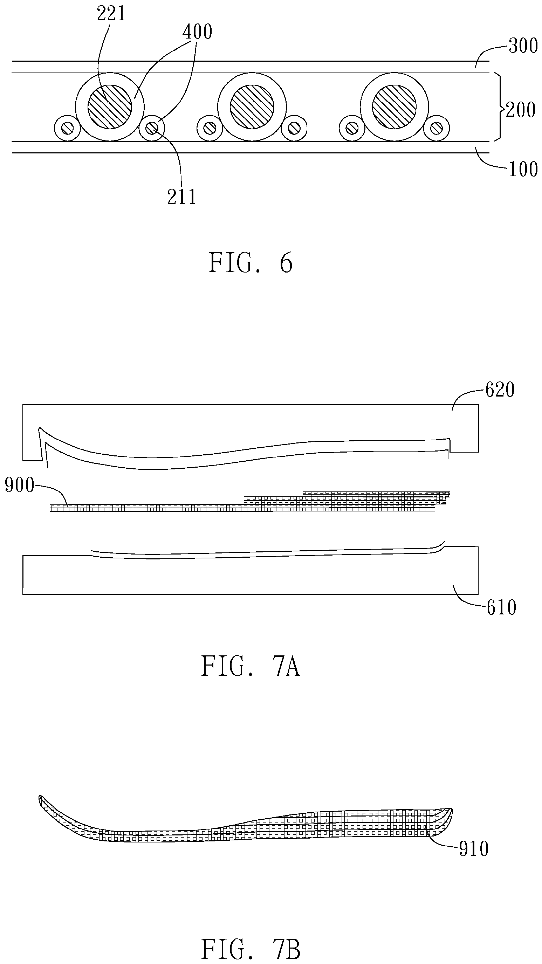

Taking a different point of view, as shown in the embodiment in FIG. 6, the middle layer 200 includes a fabric layer 210 (see FIG. 2), a plurality of bodies 221, and a fusion unit 400. The fabric layer 210 is knitted by a plurality of yarns 211. The plurality of bodies 221 are disposed on the fabric layer 210, wherein the projection of any of the plurality of bodies 221 on the fabric layer 210 at least partially eclipses any of the grid cells of the fabric layer 210. The bodies 221 can be spheres, ellipsoids, and other regular/irregular shapes. The fusion unit 400 is disposed between the plurality of bodies 221 and the fabric layer 210 to make the relative positions of the plurality of bodies 221 and the plurality of yarns 211 fixed, wherein the fusion unit 400 encapsulates the plurality of bodies 221 and at least partially covers the plurality of yarns 211. The melting point of the fusion unit 400 is respectively lower than or equal to the melting points of the bottom layer 100, the yarns 211, the bodies 221, and the top layer 300. In one embodiment of the present invention, the fusion unit 400 is made of thermoplastic polyurethane (TPU).

In one embodiment of the present invention, the body is manufactured by foaming to decrease weight further more. The yarns 211 and the bodies 221 are made of thermoplastic polyester elastomer (TPEE). The bottom layer 100 and the top layer 300 are made of thermoplastic polyester elastomer (TPEE). More particularly, while manufacturing the fabric structure 900, the fabric layer 210 is disposed on the bottom layer 100, wherein the plurality of structure bodies 220 are distributed on the fabric layer 201, followed by covering such bodies with the top layer 300, pressing and heating to a temperature higher than or equal to the melting points of the first fusion part 410 and the second fusion part 420, and then cooling to solid. Afterward, it can be cut by demand and be hot pressed again to form desired thickness and shapes. For example, in one embodiment, several fabric structures are cut to a shape of a sole and are disposed between an upper clamp and a lower clamp to be hot pressed to form shoe soles as shown in the embodiment in FIG. 7B, which is an application of the stacking fabric structure 910 of the present invention.

One of the considerations in choosing TPEE and TPU is the advantages of the two. Specifically, TPEE provides better deformation elasticity, while TPU provides better damping elasticity. Better performance is obtained by combining the advantages of the two. In other words, when selecting materials, in addition to the differences between their melting points, the type of elasticity provided could be further taken into consideration. In different embodiments, several middle layers 200 can be repeatedly disposed on the bottom layer 100. Namely, several fabric layers 210 are disposed on the bottom layer 100, wherein each fabric layer 210 has a plurality of structure bodies 220 on it, pressed and heated to a temperature higher than or equal to the melting points of the first fusion part 410 and the second fusion part 420, and then cooled to solid. Afterward, it can be cut by demand, covering the top face and the bottom face respectively with the top layer 300 and the bottom layer 100, and be hot pressed again to form desired thickness and shapes.

In different embodiments, stacking effect can also be produced if a single layer of fabric structure 900 uses yarns 211 with larger average width and/or bodies 221 with larger second average diameter D₂₂₁.

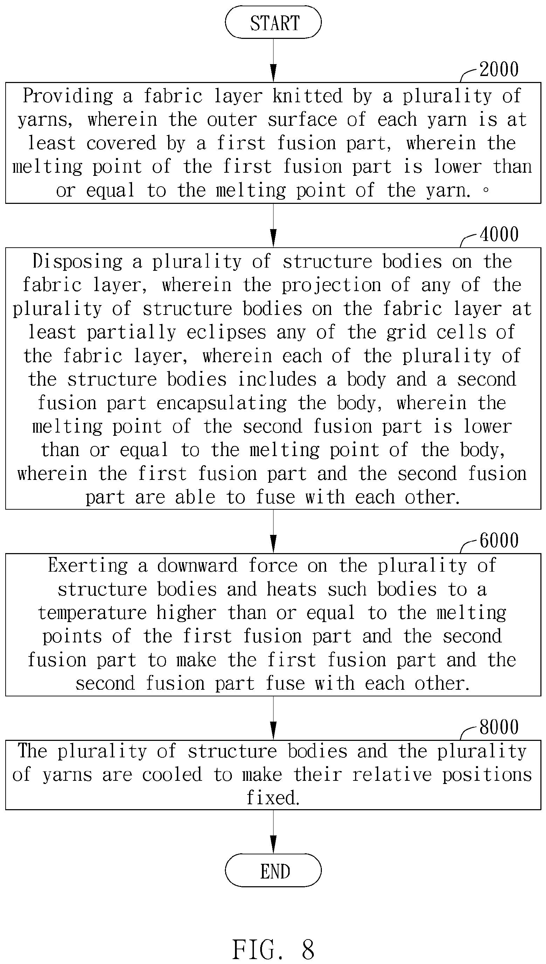

As shown in the flow chart of an embodiment in FIG. 8, the method for manufacturing a fabric structure of the present invention includes the following steps.

Step 2000 provides a fabric layer knitted by a plurality of yarns, wherein the outer surface of each yarn is at least covered by a first fusion part, wherein the melting point of the first fusion part is lower than or equal to the melting point of the yarn. More particularly, as shown in FIG. 2, a fabric layer 210 knitted by a plurality of yarns 211 is provided. As shown in FIG. 3A, the outer surface of each yarn 211 can be entirely covered by the first fusion part 410, wherein in a different embodiment as shown in FIG. 3B, the first fusion part 410 is yarn in shape and twines to partially cover the outer surface of each yarn 211.

Step 4000 disposes a plurality of structure bodies on the fabric layer, wherein the projection of any of the plurality of structure bodies on the fabric layer at least partially eclipses any of the grid cells of the fabric layer, wherein each of the plurality of the structure bodies includes a body and a second fusion part encapsulating the body, wherein the melting point of the second fusion part is lower than or equal to the melting point of the body, wherein the first fusion part and the second fusion part are able to fuse with each other. More particularly, the plurality of structure bodies 220 are distributed on the fabric layer 201 as shown in FIG. 2.

Step 6000 exerts a downward force on the plurality of structure bodies and heats such bodies to a temperature higher than or equal to the melting points of the first fusion part and the second fusion part to make the first fusion part and the second fusion part fuse with each other. More particularly, when the plurality of structure bodies 220 are pressed downward and heated to a temperature higher than or equal to the melting points of the first fusion part 410 and the second fusion part 420, the first fusion part 410 and the second fusion part 420 are in melted state and fuse with each other for the structure bodies 220 to be embedded into the grid cells 212 as shown in FIG. 5.

Step 8000 is the step where the plurality of structure bodies and the plurality of yarns are cooled to make their relative positions fixed. More particularly, after cooling, the relative positions of the bodies 221 in the structure bodies 220 and the plurality of yarns 211 are fixed since the first fusion part 410 and the second fusion part 420 are not in the melted state.

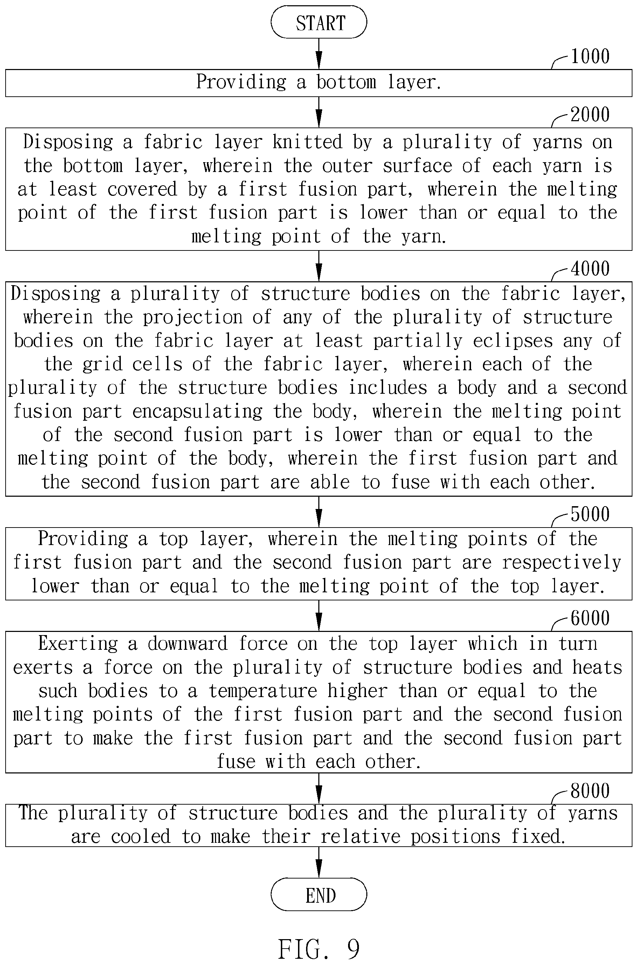

As shown in the flow chart of an embodiment in FIG. 9, the method for manufacturing a fabric structure of the present invention further includes the following steps.

Step 1000 provides a bottom layer and disposes the fabric layer on the bottom layer in step 2000.

Step 5000 provides a top layer and exerts a downward force on the top layer which in turn exerts a force on the plurality of structure bodies in step 6000, wherein the melting points of the first fusion part and the second fusion part are respectively lower than or equal to the melting point of the top layer.

Although the preferred embodiments of the present invention have been described herein, the above description is merely illustrative. Further modification of the invention herein disclosed will occur to those skilled in the respective arts and all such modifications are deemed to be within the scope of the invention as defined by the appended claims.

## Claims

1. A fabric structure, comprising:
a bottom layer;
a middle layer disposed on the bottom layer, including:
a fabric layer knitted by a plurality of yarns, wherein the outer surface of each yarn is at least covered by a first fusion part;
a plurality of structure bodies disposed on the fabric layer, wherein the projection of any of the plurality of structure bodies on the fabric layer at least partially eclipses any of the grid cells of the fabric layer, wherein each of the plurality of the structure bodies includes:
a body;
a second fusion part encapsulating the body, wherein the first fusion part and the second fusion part fuse with each other to make the relative positions of the plurality of structure bodies and the plurality of yarns fixed;
a top layer disposed on the middle layer;
wherein the melting points of the first fusion part and the second fusion part are respectively lower than or equal to the melting points of the bottom layer, the yarns, the bodies, and the top layer.

2. The fabric structure of claim 1, wherein the first fusion part is made of thermoplastic polyurethane (TPU).

3. The fabric structure of claim 1, wherein the first fusion part and the second fusion part are made of same material.

4. The fabric structure of claim 1, wherein the outer surface of each yarn is entirely covered by the first fusion part.

5. The fabric structure of claim 1, wherein the first fusion part is yarn in shape and twines to partially cover the outer surface of each yarn.

6. A fabric structure, comprising:
a bottom layer;
a middle layer disposed on the bottom layer, including:
a fabric layer knitted by a plurality of yarns;
a plurality of bodies disposed on the fabric layer, wherein the projection of any of the plurality of bodies on the fabric layer at least partially eclipses any of the grid cells of the fabric layer;
a fusion unit disposed between the plurality of bodies and the fabric layer to make the relative positions of the plurality of bodies and the plurality of yarns fixed, wherein the fusion unit encapsulates the plurality of bodies and at least partially covers the plurality of yarns;
a top layer disposed on the middle layer;
wherein the melting point of the fusion unit is respectively lower than or equal to the melting points of the bottom layer, the yarns, the bodies, and the top layer.

7. The fabric structure of claims 1 or 6, wherein the body is manufactured by foaming.

8. The fabric structure of claim 6, wherein the fusion unit is made of thermoplastic polyurethane (TPU).

9. The fabric structure of claims 1 or 6, wherein the yarns and the bodies are made of thermoplastic polyester elastomer (TPEE).

10. The fabric structure of claims 1 or 6, wherein the bottom layer and the top layer are made of thermoplastic polyester elastomer (TPEE).

11. The fabric structure of claims 1 or 6, wherein the fabric structure is for shoe soles.

12. A stacking fabric structure, comprising:
a bottom layer;
a middle layer stack disposed on the bottom layer, wherein the middle layer stacks includes a plurality of stacked middle layers, wherein each middle layer includes:
a fabric layer knitted by a plurality of yarns, wherein the outer surface of each yarn is at least covered by a first fusion part;
a plurality of structure bodies disposed on the fabric layer, wherein the projection of any of the plurality of structure bodies on the fabric layer at least partially eclipses any of the grid cells of the fabric layer, each of the plurality of the structure bodies includes:
a body
a second fusion part encapsulating the body, wherein the first fusion part and the second fusion part fuse with each other to make the relative positions of the plurality of structure bodies and the plurality of yarns fixed;
a top layer disposed on the middle layer;
wherein the melting points of the first fusion part and the second fusion part are respectively lower than or equal to the melting points of the bottom layer, the yarns, the bodies, and the top layer.

13. A stacking fabric structure, comprising:
a bottom layer;
a middle layer stack disposed on the bottom layer, wherein the middle layer stack includes a plurality of stacked middle layers, wherein each middle layer includes:
a fabric layer knitted by a plurality of yarns;
a plurality of bodies disposed on the fabric layer, wherein the projection of any of the plurality of bodies on the fabric layer at least partially eclipses any of the grid cells of the fabric layer;
a fusion unit disposed between the plurality of bodies and the fabric layer to make the relative positions of the plurality of bodies and the plurality of yarns fixed, wherein the fusion unit encapsulates the plurality of bodies and at least partially covers the plurality of yarns;
a top layer disposed on the middle layer;
wherein the melting point of the fusion unit is respectively lower than or equal to the melting points of the bottom layer, the yarns, the bodies, and the top layer.

14. The stacking fabric structure of claims 12 or 13, wherein the fabric structure is for shoe soles.

15. A method for manufacturing a fabric structure, comprising:
(A) providing a fabric layer knitted by a plurality of yarns, wherein the outer surface of each yarn is at least covered by a first fusion part, wherein the melting point of the first fusion part is lower than or equal to the melting point of the yarn;
(B) disposing a plurality of structure bodies on the fabric layer, wherein the projection of any of the plurality of structure bodies on the fabric layer at least partially eclipses any of the grid cells of the fabric layer, wherein each of the plurality of the structure bodies includes:
a body;
a second fusion part encapsulating the body, wherein the melting point of the second fusion part is lower than or equal to the melting point of the body, wherein the first fusion part and the second fusion part are able to fuse with each other;
(C) pressing downward to exert a force on the plurality of structure bodies and heating to a temperature higher than or equal to the melting points of the first fusion part and the second fusion part to make the first fusion part and the second fusion part fuse with each other;
(D) cooling to make the relative positions of the plurality of structure bodies and the plurality of yarns fixed.

16. The method for manufacturing a fabric structure of claim 15, further including:
providing a bottom layer before step (A) and disposing the fabric layer on the bottom layer, wherein the melting points of the first fusion part and the second fusion part are respectively lower than or equal to the melting point of the bottom layer;
providing a top layer between step (B) and step (C) and pressing downward to exert a force on the top layer, wherein the melting points of the first fusion part and the second fusion part are respectively lower than or equal to the melting point of the top layer.

17. The method for manufacturing a fabric structure of claim 15, wherein the first fusion part and the second fusion part are made of same material.

18. The method for manufacturing a fabric structure of claim 15, wherein the first fusion part is yarn in shape and twines to partially cover the outer surface of each yarn.
